# EUROPEAN PATENT SPECIFICATION

(11) **EP 2 645 460 B1**
(45) Date of publication and mention of the grant of the patent: **20.02.2019**
(21) Application number: 11842885.3
(22) Date of filing: 02.11.2011
(51) Int. Cl.: H01M 8/04, H01M 8/10

(54) **FUEL CELL SYSTEM**
BRENNSTOFFZELLENSYSTEM
SYSTÈME DE PILE À COMBUSTIBLE

(30) Priority: 22.11.2010 JP 2010260154
(43) Date of publication of application: 02.10.2013
(73) Proprietor: NISSAN MOTOR CO., LTD., Yokohama-shi, Kanagawa 221-0023 (JP)
(72) Inventor: IKEZOE, Keigo, Atsugi-shi Kanagawa 243-0123 (JP); ICHIKAWA, Yasushi, Atsugi-shi Kanagawa 243-0123 (JP)
(74) Representative: Hoefer & Partner Patentanwälte mbB
(86) International application number: PCT/JP2011/075297
(87) International publication number: WO 2012/070367

(56) References cited:
- EP-A1- 2 618 416
- JP-A- 56 114 287
- JP-A- 2001 210 342
- JP-A- 2002 151 116
- JP-A- 2002 313 389
- JP-A- 2005 108 759
- JP-A- 2006 294 347
- JP-A- 2007 242 522
- JP-A- 2008 112 585
- JP-A- 2009 117 189
- US-A1- 2002 022 171
- US-A1- 2003 148 167

## Description

### Technical Field

The present invention relates to a fuel cell system having cell units comprising, for example, solid state polymer-type cells.

### BACKGROUND ART

In the prior art, as the fuel cell system of this type, there is the configuration disclosed in Patent Document 1 with the title of fuel circulating-type fuel cell system.

The fuel circulating-type fuel cell system disclosed in Patent Document 1 comprises fuel cells that have hydrogen gas as the fuel and air as the oxidant fed to the fuel cells and carrying out power generation, a fuel feeding flow channel for feeding the hydrogen gas to the fuel cells, a fuel circulating flow channel for circulating the hydrogen gas, wherein the exhausted hydrogen gas exhausted as the unreacted fuel from the fuel cells is fed to merge with the hydrogen gas at a certain site of the fuel feeding flow channel, a fuel pump that fetches and feeds out the exhaust hydrogen gas, and an ejector that exploits the negative pressure generated when the hydrogen gas flows to suck in the exhaust hydrogen gas and to merge the exhaust hydrogen gas with the hydrogen gas.

### PRIOR ART DOCUMENTS

### Patent Documents

Patent Document 1: Japanese Laid Open Patent Application No. 2003-151588
Patent Document 2: JP 2009 117189 A
Patent Document 3: US 2002/022171 A1
Patent Document 4: EP 2 618 416 A1

### SUMMARY OF THE INVENTION

### OBJECT THE INVENTION TO ACHIEVE

For the fuel circulating-type fuel cell system disclosed in the Patent Document 1, when the feeding rate of the hydrogen gas needed for power generation is low, the flow velocity at the ejector nozzle section decreases, so that the Bernoulli effect becomes less significant, and the exhausted hydrogen gas cannot be well circulated. In consideration of this problem, a fuel pump is arranged for fetching and feeding the exhaust hydrogen gas in the low load state when the feeding rate of the hydrogen gas is low.

However, for the configuration, as a fuel pump is added, carrying out control of the fuel pump is necessary, so that the system becomes complicated, and realizing a smaller size is difficult. Patent Documents 2, 3 and 4 disclose further fuel cell systems. Patent Document 4 is comprised in the state of the art according to Art. 54(3) EPC.

The purpose of the present invention is to solve these problems by providing a fuel cell system, wherein the exhausted hydrogen-containing gas can be well circulated independent of the increase/decrease in the flow rate of the hydrogen-containing gas, and, at the same time, the system can be made simpler and smaller in size.

### MEANS OF ACHIEVING THE OBJECT

In order to solve the problems, the present invention provides a fuel cell system as defimded in claim 1.

### EFFECTS OF THE INVENTION

According to the present invention, it is possible to have the exhausted hydrogen-containing gas well circulated independent of an increase/decrease in the flow rate of the hydrogen-containing gas, and, at the same time, it is possible to simplify and reduce the size of the system.

### BRIEF DESCRIPTIONS OF THE DRAWINGS

FIG. 1 (A) is a schematic diagram illustrating the configuration of the fuel cell system related to the first embodiment of the present invention. (B) is a flow chart illustrating the operation of starting the fuel cell system.
FIG. 2 is a flow chart illustrating the operation based on the temperature detected at the start of the fuel cell system related to the first embodiment.
FIG. 3 is a schematic diagram illustrating the configuration of the fuel cell system related to the second embodiment of the present invention.
FIG. 4 (A) is a schematic diagram illustrating the configuration of the fuel cell system related to the third embodiment of the present invention. (B) is a diagram illustrating the relationship between the pressure acting on the reed valve and the opening degree.

### EMBODIMENTS OF THE INVENTION

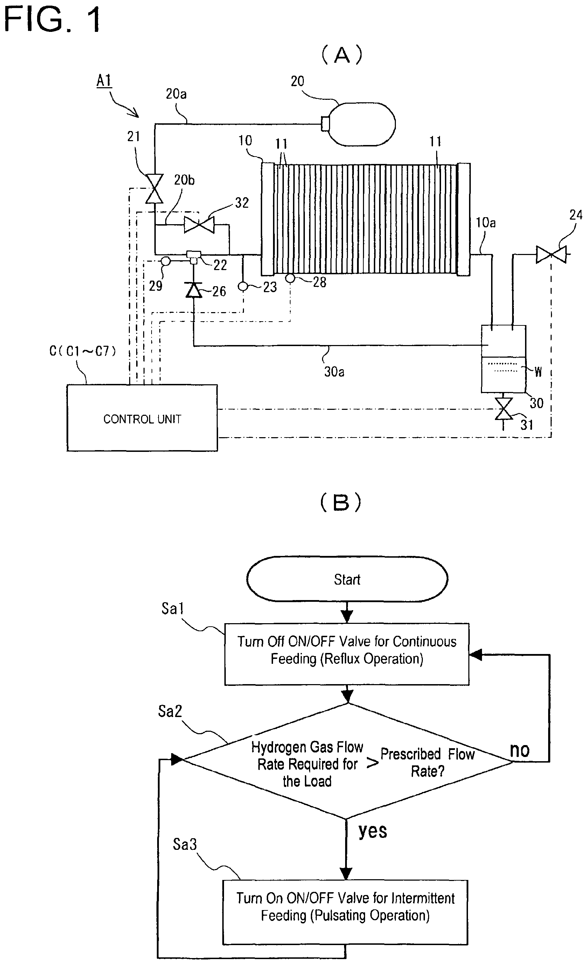

In the following, the embodiments of the present invention will be explained with reference to figures. FIG. 1(A) is a schematic diagram illustrating the configuration of the fuel cell system related to the first embodiment of the present invention. (B) is a flow chart illustrating the operation of starting the fuel cell system..

In FIGS. 1 and 2 through 4 to be presented below, among the hydrogen-containing gas and the oxygen-containing gas, only the flow system of the hydrogen-containing gas is shown, while the flow system of the oxygen-containing gas is not shown. This simplifies the explanation.

The fuel cell system A1 related to the first embodiment of the present invention comprises, in addition to a cell stack 10, a fuel tank 20, a pressure adjusting valve 21, an ejector 22, an ejector temperature sensor 29, a pressure sensor 23, a check valve 26, an ON/OFF valve 32, a cell temperature sensor 28, a nitrogen purge valve 24, a separate tank 30, a water exhausting valve 31, etc., as well as a control unit C.

Here, the cell stack 10 has a plurality of cell units 11... stacked with a space between them. The hydrogen-containing gas and the oxygen-containing gas are made to flow separate from each other inside and outside of the first semiconductor layers of the cell units 11... to generate power.

According to the present embodiment, "hydrogen gas" will be presented as an example of the "hydrogen-containing gas," and "air" will be presented as an example of the "oxygen-containing gas" in the explanation. However, the present invention is not limited to these examples.

The cell units 11... each have the solid state polymer-type cells, which each have an anode and a cathode arranged on the two sides of an electrolyte, respectively, accommodated between the separators (both not shown in the figure).

The fuel tank 20 is for storing the desired quantity of hydrogen gas to be fed to the cell stack 10. A feeding pipe 20a is connected between the fuel tank 20 and the receiving section of the cell stack 10.

The feeding pipe 20a is a feeding channel where the ejector 22 is arranged.

The pressure adjusting valve 21 has a function of steplessly adjusting the pressure of the hydrogen gas fed from the fuel tank 20. The pressure adjusting valve 21 is arranged in the middle portion of the feeding pipe 20a, is connected to the output side of the control unit C to be explained later, and regulates the feeding pressure under the control.

According to the present embodiment, the pressure adjusting valve 21 is the pressure regulating section for regulating the pressure of the hydrogen gas fed from the fuel tank 20 as the feeding source of the hydrogen gas to the receiving section of the cell stack 10 and then to the anodes of the cell units 11.

On the feeding pipe 20a and in the portion between the position on the downstream side of the pressure adjusting valve 21 and the position on the downstream side of the ejector 22, a bypass channel 20b for having the hydrogen-containing gas flow towards the cell units to bypass the ejector is arranged. Here, the bypass channel 20b is called "bypass pipe 20b."

On the bypass pipe 20b, an ON/OFF valve 32 is arranged for turning the hydrogen gas flowing in the bypass pipe 20b on/off. The ON/OFF valve 32 is connected to the output side of the control unit C and can be driven to open/close appropriately.

The separate tank 30 to be explained later is connected to the exhausting section of the cell stack 10 via an exhausting pipe 10a, and, at the same time, a reflux pipe 30a is connected as a reflux channel between the separate tank 30 and the ejector 22.

That is, the exhaust hydrogen gas exhausted from the anodes of the cell stack 10 is refluxed via the ejector 22 to the cell stack 10.

The ejector 22 is arranged on the feeding pipe 20a on the downstream side of the pressure adjusting valve 21.

With the function of catching the hydrogen gas flowing in the feeding pipe 20a, the ejector 22 displays the function in refluxing the exhaust hydrogen gas exhausted from the cell stack 10 through the reflux pipe 30a to the anodes. In this embodiment, reflux is carried out only at a low flow rate.

The ejector temperature sensor 29 measures the temperature of the ejector 22 and, according to the present embodiment, is arranged to measure the temperature of the ejector 22.

Also, the ejector temperature sensor 29 may be arranged to measure the temperature of the hydrogen gas flowing in the ejector 22. More specifically, for example, the ejector temperature sensor 29 may be arranged on the feeding pipe 20a on the upstream side of the ejector 22.

The ejector temperature sensor 29 is connected to the input side of the control unit C and measures the temperature of the ejector 22. By arranging the ejector temperature sensor 29, it is possible to make an accurate measurement of the temperature of the ejector 22.

The pressure sensor 23 is for measuring the pressure of the hydrogen gas exhausted from the ejector 22. The pressure sensor 23 is arranged on the feeding pipe 20a on the downstream side of the ejector 22 and is connected to the input side of the control unit C for detecting the pressure.

The check valve 26 is arranged on the reflux pipe 30a for preventing the backflow of the exhaust hydrogen gas to the cell stack 10 as pressure is applied on the reflux pipe 30a side in the case of an increase in the pressure in the intermittent operation. By arranging the check valve 26 in this way, it is possible for power generation with an even higher stability. However, arranging the check valve 26 is not necessary.

The cell temperature sensor 28 is for measuring the temperature of the cell stack 10 and, thus, also the temperature of the cell unit 11 and is connected to the input side of the control unit C.

The separate tank 30 separates water w contained in the exhaust hydrogen gas exhausted from the anodes, and the water w staying in the separate tank 30 is exhausted out through the water exhausting valve 31.

Also, the water exhausting valve 31 is connected to the output side of the control unit C and is turned on/off appropriately under control.

The nitrogen purge valve 24 is for exhausting the nitrogen gas staying in the separate tank 30, is connected to the output side of the control unit C, and is turned on/off under control.

The control unit C comprises a CPU (a Central Processing Unit), an interface circuit, etc. and displays the following functions by executing the desired program.
(1) The control unit C has the function of determining whether the flow rate of the hydrogen-containing gas fed to the cell unit 11 is lower than the prescribed level. This function is called "gas flow rate determining means C1."

For example, the "determination regarding whether the flow rate is lower than the prescribed level" is carried out by determining whether the load is below 10% of the highest output.

In addition, experiments have indicated that, for the conventional ejector designed corresponding to the requested value of the highest output, the reflux cannot be carried out at a low load of 10% or lower (the low-flow rate region); for the conventional ejector designed to make reflux under a low load of 10% or lower, when the load is higher than that, the loss in pressure becomes too high, and the reflux flow rate becomes insufficient.

That is, the "prescribed flow rate" refers to the flow rate at which the exhausted hydrogen-containing gas cannot be refluxed to the cell unit 11 with the conventional ejector designed at the requested value of the highest output. In other words, for the conventional ejector designed at the requested value of the highest output, the flow rate of the hydrogen gas cannot be refluxed through the reflux pipe 30a to the cell unit 11.
(2) A function in which, when a determination is made that the flow rate of the hydrogen-containing gas fed to the cell unit 11 is over the prescribed level, the pressure of the hydrogen-containing gas is varied intermittently. This function is called the "gas feed pressure varying means C2."

According to the present embodiment, the pressure of the hydrogen gas fed to the anodes of the cell unit 11 via the pressure adjusting valve 21 as the pressure regulating section is varied intermittently.

In addition, when the flow rate of the hydrogen gas is lower than the prescribed level, the pressure of the hydrogen gas is kept constant while the hydrogen gas is fed.

Here, "intermittently" means both at equal intervals and at irregular intervals.

The value of the variation in the pressure is set to enable exhaustion of the impurities in the solid state polymer-type cells. More specifically, it is possible to set two levels, including a higher pressure level at which water is exhausted and a lower pressure level at which the nitrogen gas or the like is exhausted.

For example, one may also adopt a scheme in which the normal pressure variation is set at a lower pressure level at which the nitrogen gas, etc. are exhausted, and, after a prescribed number of cycles of the repeated variation in the pressure, the pressure variation is carried out at a higher pressure level at which water is exhausted.

That is, when the exhausted hydrogen gas is not refluxed, by varying the anode pressure intermittently, the impurities (water, nitrogen, etc.) in the solid state polymer-type cells are exhausted. As a result, it is possible to increase the overall hydrogen gas concentration from the upstream side to the downstream side of the anode of the solid state polymer-type cells. As a result, creating power generation with a high degree of stability is possible.
(3) The function of measuring the temperature of the cell unit 11. This function is called the "cell temperature measurement means C3."

According to the present embodiment, the temperature of the cell unit 11 is measured on the basis of the cell temperature sensor 28.
(4) The following function: when a determination is made that the flow rate of the hydrogen-containing gas fed to the cell unit 11 is lower than the prescribed level, and when a determination is made that the flow rate of the hydrogen-containing gas is over the prescribed level in the feeding pipe 20a where the ejector 22 is arranged, a switch of the flow channel is carried out via the ON/OFF valve 32 as the flow channel switching section for the bypass pipe 20b for bypassing the ejector 22. This function is called the "flow channel switching means C4."
(5) The function of determining whether the temperature of the ejector 22 measured with the ejector temperature sensor 29 is within a prescribed temperature region including the freezing point. This function is called the "ejector temperature determining means C5."

Here, the "prescribed temperature region including the freezing point" refers to the temperature region lower than about 20°C as the upper limit temperature, at which the nitrogen permeability from the cathode increases, the operation with intermittent variation of the pressure of the hydrogen-containing gas becomes difficult, and the temperature of the ejector 22 is such that the icing does not take place even in consideration of the error in the sensors and the thermal capacity of the ejector 22.

Here, "icing" refers to the state in which the water vapor in the reflux from the cell stack 10 is cooled lower than the freezing point by the feed hydrogen from the fuel tank 20 and is frozen at the ejector nozzle section so that the ejector is clogged.

In this embodiment, the explanation has provided an example in which the ejector temperature determining means C5 is arranged to determine whether the temperature of the ejector 22 measured with the ejector temperature sensor 29 is within the prescribed temperature region including the freezing point. However, one may also adopt a scheme in which, instead of the ejector temperature determining means C5, an ejector temperature determining means is arranged to determine whether the temperature of the ejector 22 enters the prescribed temperature region including the freezing point.
(6) The following function: when a determination is made that the measured temperature of the ejector 22 is within the prescribed temperature region including the freezing point, the pressure of the hydrogen-containing gas is varied intermittently. This function is called the "gas feeding pressure varying means C6."

According to the present embodiment, with the pressure adjusting valve 21 as the pressure regulating section, the pressure of the hydrogen gas fed to the anodes of the cell unit 11 is varied intermittently.

When the ejector temperature determining means is arranged, instead of the gas feeding pressure varying means C6, a gas feeding pressure varying means is arranged so that, when a determination is made that the temperature of the ejector 22 enters the prescribed temperature region including the freezing point, the pressure of the hydrogen-containing gas is varied intermittently.
(7) The following function: when a determination is made that the temperature of the ejector 22 is within the prescribed temperature region including the freezing point, the flow channel is switched by the ON/OFF valve 32 as the flow channel switching section so that the hydrogen-containing gas with pressure varying intermittently is made to bypass the ejector 22. This function is called the "flow channel switching means C7."

According to the present embodiment, when a determination is made that the temperature of the ejector 22 enters the prescribed temperature region including the freezing point, by switching the bypass pipe 20b with the ON/OFF valve 32, the hydrogen-containing gas with pressure varying intermittently is made to bypass the ejector 22.

In the following, the operation when the fuel cell system A1 with the previous configuration is started will be explained with reference to FIG. 1(B).

Step 1: Step 1 is abbreviated as "Sa1" in FIG. 1(B). The same abbreviation is used in the following.

When the ON/OFF valve 32 is turned off, the hydrogen gas is continuously fed so that the pressure at the anode is kept constant.

Step 2: A determination is made regarding whether the flow rate of the hydrogen gas needed to correspond to the load is over the prescribed level. If a determination has been made that the flow rate of the hydrogen gas needed to correspond to the load is over the prescribed level, the operation goes to step 3. If NOT, the operation returns to step 1.

Step 3: While the ON/OFF valve 32 is turned on, the pressure of the hydrogen gas fed from the fuel tank 20 is varied intermittently as the hydrogen gas is fed to the anodes.

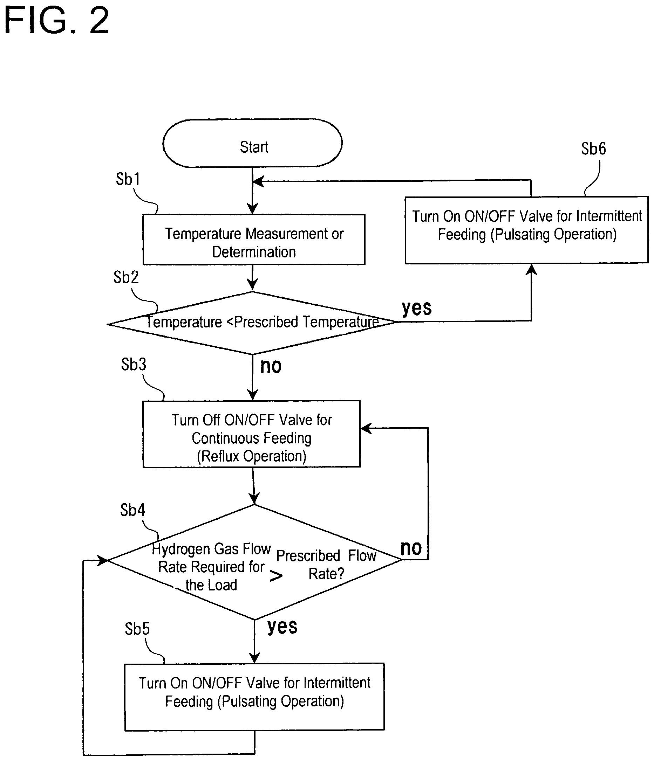

In the following, the operation on the basis of the temperature detected when the fuel cell system A1 with the previous configuration is started will be explained with reference to FIG. 2. FIG. 2 is a flow chart illustrating the operation based on the temperature detected when the fuel cell system A1 is started.

Step 1: Step 1 is abbreviated as "Sbl" in FIG. 2. The same abbreviation is used in the following. The temperature of the ejector 22 is measured.

Step 2: A determination is made regarding whether the temperature of the ejector 22 is within the prescribed temperature region including the freezing point. When a determination is made that the temperature of the ejector 22 is within the prescribed temperature region, the operation goes to step 6. If NOT, the operation goes to step 3.

Step 3: As the ON/OFF valve 32 is turned off, the exhausted hydrogen gas is refluxed via the ejector 22.

Step 4: A determination is made regarding whether the flow rate of the hydrogen gas needed for coping with the load is over the prescribed level. If a determination is made that the flow rate of the hydrogen gas needed for coping with the load is over the prescribed level, the operation goes to step 5. If NOT, the operation returns to step 3.

Step 5: The ON/OFF valve 32 is turned on, so that the pressure of the hydrogen gas fed from the fuel tank 20 is varied intermittently as the hydrogen gas is fed to the anodes.

In this case, the loss in pressure of the ejector 22 is high, and it almost impossible to work in the intermittent operation.

Step 6: The ON/OFF valve 32 is turned on, the pressure of the hydrogen gas fed from the fuel tank 20 is varied intermittently as the hydrogen gas is fed to the anodes, and the operation then returns to step 1.

According to the present embodiment, the following effects can be realized.
- It is possible to circulate the exhausted hydrogen-containing gas well independent of the variation in the flow rate of the hydrogen-containing gas, and, at the same time, simplifying and reducing the size of the system is possible.
- As the pressure on the low load side is decreased, the hydrogen permeability can be decreased, and it is possible to cut the fuel costs.
- It is possible to avoid degradation of the fuel efficiency, while it is possible to prevent icing of the ejector.

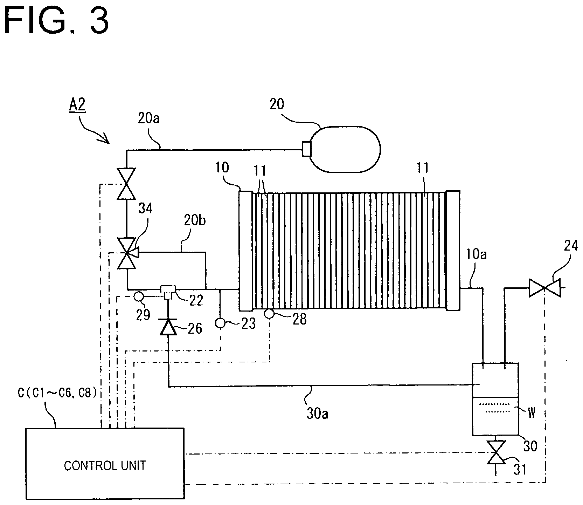

In the following, the fuel cell system related to the second embodiment of the present invention will be explained with reference to FIG. 3. FIG. 3 is a diagram illustrating schematically the configuration of the fuel cell system related to the second embodiment of the present invention.

For the configuration of the hardware of the fuel cell system A2 related to the second embodiment, instead of the ON/OFF valve 32 explained above with reference to the fuel cell system A1 related to the first embodiment, a three-way valve 34 is arranged. Consequently, the same keys as those used in the first embodiment are adopted in this embodiment, and they will not be explained again. In the following, only the different features will be explained.

While the three-way valve 34 is arranged between the feeding pipe 20a and the bypass pipe 20b, the three-way valve 34 is connected to the output side of the control unit C and is switched appropriately under control for switching the feeding pipe 20a where the ejector 22 is arranged and the bypass pipe 20b.

That is, the control unit C in this embodiment has the following function in addition to the various functions described with reference to (1) through (6).
(8) The following function: when a determination is made that the temperature of the ejector 22 is within the prescribed temperature region including the freezing point, switching is carried out by means of the three-way valve 34 as the flow channel switching section so that it bypasses the ejector 22. This function is called "flow chart switching means C8."

As a result, in the intermittent operation, it is possible to bypass the ejector 22 so that avoiding the loss in pressure of the ejector 22 is possible, and carrying out a more stable intermittent operation is possible.

In addition, the operation of the fuel cell system A2 with the previous configuration is identical to that explained with reference to FIGS. 1(B) and 2 and, therefore, will not be explained in detail again for this embodiment.

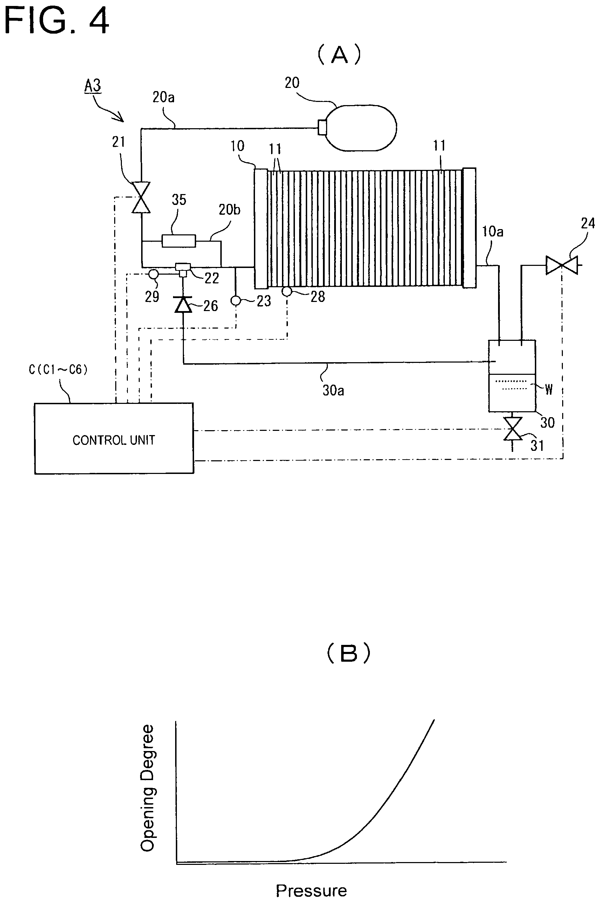

In the following, for the fuel cell system related to the third embodiment of the present invention, an explanation will be made with reference to FIGS. 4(A), (B). FIG. 4(A) is a schematic diagram illustrating the configuration of the fuel cell system related to the third embodiment of the present invention. FIG. 4 (B) is a diagram illustrating the relationship between the pressure acting on the reed valve and the opening degree.

For the configuration of the hardware of the fuel cell system A3 related to the third embodiment, instead of the ON/OFF valve 32 explained with reference to the fuel cell system A1 of the first embodiment, a reed valve 35 is arranged. Consequently, according to the present embodiment, the same keys as those in the first embodiment are adopted, and they will not be explained in detail again. In the following, only the different features will be explained.

The reed valve 35 has a function that has the opening degree changed corresponding to the pressure of the hydrogen gas acting on the reed valve. More specifically, as shown in FIG. 4(B), as the pressure of the hydrogen gas rises, the opening degree increases.

That is, as the pressure rises on the high load side (as the cathode is also raised, no pressure difference takes place), the opening degree of the reed valve 35 increases, so that it is possible to pass the bypass side without passing through the ejector 22, and the intermittent operation can be carried out.

In the intermittent operation, the reed valve 35 makes the flow bypass the ejector 22, so that it is possible to avoid the loss in pressure of the ejector 22, and carrying out the intermittent operation with an even higher degree of stability is possible.

By adopting the reed valve 35, there is no need to carry out control with the control unit C, so that it is possible to simplify the system configuration and cut the cost.

When a determination is made that the measured temperature of the ejector 22 is within the prescribed temperature region including the freezing point, the pressure is increased, and the intermittent operation is carried out, so that the opening degree of the reed valve 35 is increased to detour the ejector 22.

The operation of the fuel cell system A3 with the configuration of the present embodiment is the same as that explained with reference to FIGS. 1(B) and 2. Consequently, the operation will not be explained in detail again.

However, the present invention is not limited to these embodiments.

In the embodiments, an explanation has been made with reference to the example in which an ejector temperature determining means is arranged. However, one may also adopt a scheme in which, instead of the ejector temperature determining means, an ejector temperature predicting means that can predict the temperature of the ejector is arranged.

The ejector temperature predicting means in the following application example can be adopted preferably. With the cell temperature sensor 28 attached to the stack and the temperature sensors attached to the accessories near the ejector not shown in the drawing, a map is prepared for the difference between the reading value of the temperature sensor and the temperature of the ejector main body beforehand by means of experiments and simulation, etc. in consideration of the heat releasing quantity and the thermal capacity, and the map is then used to predict the ejector temperature.

In this case, the ejector temperature determining means determines whether the predicted temperature of the ejector is within the prescribed temperature region including the freezing point.

While certain embodiments have been described, these embodiments have been presented by way of example only and are not intended to limit the scope of the invention.

### Explanation of Keys

- 11: cell stack
- 20a: feeding channel (feeding pipe)
- 20b: bypass channel (bypass pipe)
- 22: ejector
- 27: three-way valve
- 28: cell temperature sensor
- 30a: reflux channel (reflux pipe)
- 33: stop valve
- 35: reed valve
- C1: gas flow rate determining means
- C2, C6: gas feed pressure varying means
- C3: cell temperature detecting means
- C4, C8: flow channel switching means
- C5: ejector temperature determining means

## Claims

1. A fuel cell system (A1), comprising:
- a plurality of cell units (11), which generate power by feeding the hydrogen-containing gas and the oxygen-containing gas separated from each other and then having them flow and join with each other;
- a feeding channel (20a) having an ejector (22) arranged therein for refluxing the exhausted hydrogen-containing gas exhausted from the cell units (11) back to the cell units (11); and
- a bypass channel (20b) that has the hydrogen-containing gas flowing to the cell units (11) bypass the ejector (22);
**characterized by** a control unit (C) comprising:
- a hydrogen-containing gas flow rate determination means (C2) that is arranged to determine whether a required flow rate of the hydrogen-containing gas flowing in the feeding channel (20a) is over a predetermined level; and
- a gas feeding pressure varying means (C6) that is arranged to make the hydrogen-containing gas flow in the bypass channel (20b), and, at the same time, intermittently vary the pressure of the hydrogen-containing gas fed from a fuel tank (20) to the feeding channel (20a), upon determining that the required flow rate of the hydrogen-containing gas flowing in the feeding channel (20a) is over the predetermined level and by intermittent feeding or pulsating operation,
wherein when the flow rate of the hydrogen-containing gas fed to the cell units (11) is lower than the prescribed level, the hydrogen-containing gas is made to flow to the feeding channel (20a) having the ejector (22) arranged therein.

2. The fuel cell system (A1) according to claim 1, wherein the ejector (22) is designed so that, when the output is lower than the requested level of the highest output of the fuel cells, it is possible to make reflux up to the flow rate of the exhausted hydrogen-containing gas.

3. The fuel cell system (A1) according to claim 1 or 2,
- further comprising a flow channel switching section (C4, C7, C8) that is arranged to switch the flow channel of the hydrogen-containing gas in the cell units (11);
- wherein the flow channel switching section (C4, C7, C8) is configured to work so that,
- when the required flow rate of the hydrogen-containing gas fed to the cell units (11) is lower than the predetermined level, the hydrogen-containing gas is made to flow in the feeding channel (20a) having the ejector (22) arranged therein; on the other hand,
- when the required flow rate of the hydrogen-containing gas is higher than the predetermined level, the hydrogen-containing gas is made to flow in the bypass channel (20b).

4. The fuel cell system (A1) according to any one of claims 1, 2 or 3, further comprising
- an ejector temperature measuring means (C3) for measuring the temperature of the ejector (22),
- an ejector temperature determining means (C5) that is arranged to determine whether the measured temperature of the ejector (22) is within a prescribed temperature region including the freezing point, and
wherein the following means for the case when a determination is made that the measured temperature of the ejector (22) is within the prescribed temperature region including the freezing point: a gas feeding pressure varying means that is arranged to regulate the pressure of the hydrogen-containing gas to make intermittent variations and a flow channel switching means (C4, C7, C8) that is arranged to switch the flow to the bypass channel (20b) via the flow channel switching section (C4, C7, C8).

5. The fuel cell system (A1) according to any one of claims 1, 2 or 3, further comprising
- an ejector temperature predicting means that is arranged to predict the temperature of the ejector (22) beforehand and
- an ejector temperature determining means (C5) that is arranged to determine whether the measured temperature of the ejector (22) is within a prescribed temperature region including the freezing point, and
wherein the following means for the case when a determination is made that the predicted temperature of the ejector (22) is within the prescribed temperature region including the freezing point: a gas feeding pressure varying means that is arranged to regulate the pressure of the hydrogen-containing gas to make intermittent variations and a flow channel switching means (C4, C7, C8) that is arranged to switch the flow to the bypass channel (20b) via the flow channel switching section (C4, C7, C8).

6. The fuel cell system (A1) according to any one of claims 1, 2 or 3,
- further comprising an ejector temperature determining means (C5) that is arranged to determine whether the temperature of the ejector (22) is within a prescribed temperature region including the freezing point, and
- the following means for the case when a determination is made that the temperature of the ejector (22) is within the prescribed temperature region including the freezing point: a gas feeding pressure varying means that is arranged to regulate the pressure of the hydrogen-containing gas to make intermittent variations and a flow channel switching means (C4, C7, C8) that is configured to switch the flow to the bypass channel (20b).

7. The fuel cell system (A1) according to claim 2, wherein the ejector temperature sensor for measuring the temperature of the ejector (22) is arranged to measure the temperature of the hydrogen-containing gas flowing towards the ejector (22).

8. The fuel cell system (A1) according to claim 7, wherein the ejector temperature sensor for measuring the temperature of the ejector (22) is arranged to measure the temperature of the ejector (22).

9. The fuel cell system (A1) according to any one of claims 3 through 8, wherein
- the flow channel switching section (C4, C7, C8) is a stop valve (33) arranged in the bypass channel (20b),and
- the flow channel switching means (C4, C7, C8) is arranged to switch the flow channel via the stop valve (33).

10. The fuel cell system (A1) according to any one of claims 3 through 8, wherein
- the flow channel switching section (C4, C7, C8) is a three-way valve (27) for switching the feeding channel (20a) and the bypass channel (20b), and
- the flow channel switching means (C4, C7, C8) is arranged to switch the flow channel via the three-way valve (27).

11. The fuel cell system (A1) according to any one of claims 3 through 8, wherein
- the flow channel switching section (C4, C7, C8) is a reed valve (35) arranged on the bypass channel (20b), and
- the flow channel switching means (C4, C7, C8) is arranged to switch the flow channel via the reed valve (35).

## Patentansprüche

1. Brennstoffzellensystem (A1), umfassend:
- eine Vielzahl von Zelleinheiten (11), die durch Zuführen des wasserstoffhaltigen Gases und des sauerstoffhaltigen Gases getrennt voneinander und anschließendem Fließen und Verbinden miteinander Energie erzeugen;
- einen Zufuhrkanal (20a) mit einem darin angeordneten Ejektor (22) zum Zurückführen des aus den Zelleinheiten (11) ausgestoßenen wasserstoffhaltigen Gases zu den Zelleinheiten (11); und
- einen Bypasskanal (20b), in dem das zu den Zelleinheiten (11) strömende wasserstoffhaltige Gas den Ejektor (22) umgeht;
**gekennzeichnet durch** eine Steuereinheit (C), umfassend:
- eine Einrichtung (C2) zur Ermittlung der Durchflussmenge an wasserstoffhaltigem Gas, die zum Ermitteln eingerichtet ist, ob eine erforderliche Durchflussmenge des in den Zufuhrkanal (20a) strömenden wasserstoffhaltigen Gases über einem vorbestimmten Niveau liegt; und
- eine Gaszufuhrdruck-Änderungseinrichtung (C6), die zum Einströmen lassen des wasserstoffhaltigen Gases in den Bypasskanal (20b) und gleichzeitig zum intermittierenden Ändern des Drucks des aus einem Brennstofftank (20) zum Zufuhrkanal (20a) zugeführten wasserstoffhaltigen Gases bei Ermittlung, dass die erforderliche Durchflussmenge des in den Zufuhrkanal (20a) strömenden wasserstoffhaltigen Gases über dem vorbestimmten Niveau liegt, und durch einen intermittierenden Zufuhr- oder Pulsiervorgang eingerichtet ist,
wobei, wenn die Durchflussmenge des den Zelleinheiten (11) zugeführten wasserstoffhaltigen Gases geringer als das vorgeschriebene Niveau ist, das wasserstoffhaltige Gas zum Strömen in den Zufuhrkanal (20a) mit dem darin angeordneten Ejektor (22) gebracht wird.

2. Brennstoffzellensystem (A1) nach Anspruch 1, wobei der Ejektor (22) so ausgelegt ist, dass, wenn die Ausgangsleistung niedriger als das geforderte Niveau der höchsten Ausgangsleistung der Brennstoffzellen ist, es möglich ist, einen Rückfluss bis zur Durchflussmenge des verbrauchten wasserstoffhaltigen Gases herzustellen.

3. Brennstoffzellensystem (A1) nach Anspruch 1 oder 2,
- ferner umfassend einen Strömungskanal-Umschaltabschnitt (C4, C7, C8), der zum Umschalten des Strömungskanals des wasserstoffhaltigen Gases in den Zelleinheiten (11) eingerichtet ist;
- wobei der Strömungskanal-Umschaltabschnitt (C4, C7, C8) konfiguriert ist, so zu arbeiten, dass
- wenn die erforderliche Durchflussmenge des den Zelleinheiten (11) zugeführten wasserstoffhaltigen Gases geringer als das vorbestimmte Niveau ist, das wasserstoffhaltige Gas zum Strömen in den Zuführungskanal (20a) mit dem darin angeordneten Ejektor (22) gebracht wird; wohingegen,
- wenn die erforderliche Durchflussmenge des wasserstoffhaltigen Gases größer als das vorbestimmte Niveau ist, das wasserstoffhaltige Gas zum Strömen in den Bypasskanal (20b) gebracht wird.

4. Brennstoffzellensystem (A1) nach einem der Ansprüche 1, 2 oder 3, ferner umfassend:
- eine Ejektortemperatur-Messeinrichtung (C3) zum Messen der Temperatur des Ejektors (22),
- eine Ejektortemperatur-Ermitttlungseinrichtung (C5), die zum Ermitteln eingerichtet ist, ob die gemessene Temperatur des Ejektors (22) innerhalb eines vorgeschriebenen Temperaturbereichs einschließlich des Gefrierpunkts liegt, und
die folgenden Einrichtungen für den Fall, wenn eine Ermittlung erfolgt, dass die gemessene Temperatur des Ejektors (22) innerhalb des vorgeschriebenen Temperaturbereichs einschließlich des Gefrierpunkts liegt: eine Gaszufuhrdruck-Änderungseinrichtung, die zum Regulieren des Drucks des wasserstoffhaltigen Gases zum Erzeugen intermittierender Änderungen eingerichtet ist, und eine Strömungskanal-Umschalteinrichtung (C4, C7, C8), die zum Umschalten der Strömung mittels des Strömungskanal-Umschaltabschnitts (C4, C7, C8) zum Bypasskanal (20b) eingerichtet ist.

5. Brennstoffzellensystem (A1) nach einem der Ansprüche 1, 2 oder 3, ferner umfassend
- eine Ejektortemperatur-Vorhersageeinrichtung, die zum Vorhersagen der Temperatur des Ejektors (22) eingerichtet ist,
- eine Ejektortemperatur-Ermittlungseinrichtung (C5), die zum Ermitteln eingerichtet ist, ob die gemessene Temperatur des Ejektors (22) innerhalb eines vorgeschriebenen Temperaturbereichs einschließlich des Gefrierpunkts liegt, und
die folgenden Einrichtungen für den Fall, wenn eine Ermittlung erfolgt, dass die vorhergesagte Temperatur des Ejektors (22) innerhalb des vorgeschriebenen Temperaturbereichs einschließlich des Gefrierpunkts liegt: eine Gaszufuhrdruck-Änderungseinrichtung, die zum Regulieren des Drucks des wasserstoffhaltigen Gases zum Erzeugen intermittierender Änderungen eingerichtet ist, und eine Strömungskanal-Umschalteinrichtung (C4, C7, C8), die zum Umschalten der Strömung mittels des Strömungskanal-Umschaltabschnitts (C4, C7, C8) zum Bypasskanal (20b) eingerichtet ist.

6. Brennstoffzellensystem (A1) nach einem der Ansprüche 1, 2 oder 3,
- ferner umfassend eine Ejektortemperatur-Ermittlungseinrichtung (C5), die zum Ermitteln eingerichtet ist, ob die Temperatur des Ejektors (22) innerhalb eines vorgeschriebenen Temperaturbereichs einschließlich des Gefrierpunkts liegt, und
- die folgenden Einrichtungen für den Fall, dass eine Ermittlung erfolgt, dass die Temperatur des Ejektors (22) innerhalb des vorgeschriebenen Temperaturbereichs einschließlich des Gefrierpunkts liegt: eine Gaszufuhrdruck-Änderungseinrichtung, die zum Regulieren des Drucks des wasserstoffhaltigen Gases zum Erzeugen intermittierender Änderungen eingerichtet ist, und eine Strömungskanal-Umschalteinrichtung (C4, C7, C8), die zum Umschalten der Strömung zum Bypasskanal (20b) eingerichtet ist.

7. Brennstoffzellensystem (A1) nach Anspruch 2, wobei der Ejektor-Temperatursensor zum Messen der Temperatur des Ejektors (22) zum Messen der Temperatur des zum Ejektor (22) strömenden wasserstoffhaltigen Gases eingerichtet ist.

8. Brennstoffzellensystem (A1) nach Anspruch 7, wobei der Ejektor-Temperatursensor zum Messen der Temperatur des Ejektors (22) zum Messen der Temperatur des Ejektors (22) eingerichtet ist.

9. Brennstoffzellensystem (A1) nach einem der Ansprüche 3 bis 8, wobei
- der Strömungskanal-Umschaltabschnitt (C4, C7, C8) ein im Bypasskanal (20b) angeordnetes Absperrventil (33) ist, und
- die Strömungskanal-Umschalteinrichtung (C4, C7, C8) zum Umschalten des Strömungskanals mittels des Absperrventils (33) eingerichtet ist.

10. Brennstoffzellensystem (A1) nach einem der Ansprüche 3 bis 8, wobei
- der Strömungskanal-Umschaltabschnitt (C4, C7, C8) ein Dreiwegeventil (27) zum Umschalten des Zufuhrkanals (20a) und des Bypasskanals (20b) ist, und
- die Strömungskanal-Umschalteinrichtung (C4, C7, C8) zum Umschalten des Strömungskanals mittel des Dreiwegeventils (27) eingerichtet ist.

11. Brennstoffzellensystem (A1) nach einem der Ansprüche 3 bis 8, wobei
- der Strömungskanal-Umschaltabschnitt (C4, C7, C8) ein am Bypasskanal (20b) angeordnetes Reedventil (35) ist, und
- die Strömungskanal-Umschalteinrichtung (C4, C7, C8) zum Umschalten des Strömungskanals mittels des Reedventils (35) eingerichtet ist.

## Revendications

1. Système de pile à combustible (A1), comprenant :
- une pluralité d'unités de pile (11), qui génèrent de l'énergie en fournissant le gaz contenant de l'hydrogène et le gaz contenant de l'oxygène séparés l'un de l'autre, puis en les laissant s'écouler et se réunir ;
- un canal d'alimentation (20a) ayant un éjecteur (22) agencé dans celui-ci pour porter à reflux le gaz contenant de l'hydrogène évacué, qui est évacué à partir des unités de pile (11), vers les unités de pile (11) ; et
- un canal de dérivation (20b) dans lequel le gaz contenant de l'hydrogène s'écoulant vers les unités de pile (11) contourne l'éjecteur (22) ;
**caractérisé par** une unité de commande (C) comprenant :
- un moyen (C2) de détermination de débit de gaz contenant de l'hydrogène qui est agencé pour déterminer si un débit requis du gaz contenant de l'hydrogène s'écoulant dans le canal d'alimentation (20a) dépasse un niveau prédéterminé ; et
- un moyen de variation de pression d'alimentation en gaz (C6) qui est agencé pour amener le gaz contenant de l'hydrogène à s'écouler dans le canal de dérivation (20b) et, simultanément, faire varier de façon intermittente la pression du gaz contenant de l'hydrogène fourni à partir d'un réservoir à combustible (20) au canal d'alimentation (20a), lorsqu'il est déterminé que le débit requis du gaz contenant de l'hydrogène s'écoulant dans le canal d'alimentation (20a) dépasse le niveau prédéterminé et par une opération d'alimentation intermittente ou de pulsation,
dans lequel, lorsque le débit du gaz contenant de l'hydrogène fourni aux unités de pile (11) est inférieur au niveau prescrit, le gaz contenant de l'hydrogène est amené à s'écouler vers le canal d'alimentation (20a) dans lequel est agencé l'éjecteur (22).

2. Système de pile à combustible (A1) selon la revendication 1, dans lequel l'éjecteur (22) est conçu de sorte que, lorsque la production est inférieure au niveau demandé de la production la plus élevée des piles à combustible, il soit possible d'effectuer le reflux jusqu'au débit du gaz contenant de l'hydrogène évacué.

3. Système de pile à combustible (A1) selon la revendication 1 ou 2,
- comprenant en outre une section de commutation de canal d'écoulement (C4, C7, C8) qui est agencée pour commuter le canal d'écoulement du gaz contenant de l'hydrogène dans les unités de pile (11) ;
- dans lequel la section de commutation de canal d'écoulement (C4, C7, C8) est configurée pour fonctionner de sorte que,
- lorsque le débit requis du gaz contenant de l'hydrogène fourni aux unités de pile (11) est inférieur au niveau prédéterminé, le gaz contenant de l'hydrogène soit amené à s'écouler dans le canal d'alimentation (20a) dans lequel est agencé l'éjecteur (22) ; d'autre part,
- lorsque le débit requis du gaz contenant de l'hydrogène est supérieur au niveau prédéterminé, le gaz contenant de l'hydrogène soit amené à s'écouler dans le canal de dérivation (20b).

4. Système de pile à combustible (A1) selon l'une quelconque de la revendication 1, 2 ou 3, comprenant en outre
- un moyen de mesure de la température de l'éjecteur (C3) pour mesurer la température de l'éjecteur (22),
- un moyen de détermination de la température de l'éjecteur (C5) qui est agencé pour déterminer si la température mesurée de l'éjecteur (22) se situe dans une région de température prescrite incluant le point de congélation, et
dans lequel les moyens suivants pour le cas où il est déterminé que la température mesurée de l'éjecteur (22) se situe dans la région de température prescrite incluant le point de congélation : un moyen de variation de pression d'alimentation en gaz qui est agencé pour réguler la pression du gaz contenant de l'hydrogène pour effectuer des variations intermittentes et un moyen de commutation de canal d'écoulement (C4, C7, C8) qui est agencé pour commuter l'écoulement vers le canal de dérivation (20b) par l'intermédiaire de la section de commutation de canal d'écoulement (C4, C7, C8).

5. Système de pile à combustible (A1) selon l'une quelconque de la revendication 1, 2 ou 3, comprenant en outre
- un moyen de prédiction de la température de l'éjecteur qui est agencé pour prédire à l'avance la température de l'éjecteur (22) et
- un moyen de détermination de la température de l'éjecteur (C5) qui est agencé pour déterminer si la température mesurée de l'éjecteur (22) se situe dans une région de température prescrite incluant le point de congélation, et
dans lequel les moyens suivants pour le cas où il est déterminé que la température prédite de l'éjecteur (22) se situe dans la région de température prescrite incluant le point de congélation : un moyen de variation de pression d'alimentation en gaz qui est agencé pour réguler la pression du gaz contenant de l'hydrogène pour effectuer des variations intermittentes et un moyen de commutation de canal d'écoulement (C4, C7, C8) qui est agencé pour commuter l'écoulement vers le canal de dérivation (20b) par l'intermédiaire de la section de commutation de canal d'écoulement (C4, C7, C8).

6. Système de pile à combustible (A1) selon l'une quelconque de la revendication 1, 2 ou 3,
- comprenant en outre un moyen de détermination de la température de l'éjecteur (C5) qui est agencé pour déterminer si la température de l'éjecteur (22) se situe dans une région de température prescrite incluant le point de congélation, et
- les moyens suivants pour le cas où il est déterminé que la température de l'éjecteur (22) se situe dans la région de température prescrite incluant le point de congélation : un moyen de variation de la pression d'alimentation en gaz qui est agencé pour réguler la pression du gaz contenant de l'hydrogène pour effectuer des variations intermittentes et un moyen de commutation de canal d'écoulement (C4, C7, C8) qui est configuré pour commuter l'écoulement vers le canal de dérivation (20b).

7. Système de pile à combustible (A1) selon la revendication 2, dans lequel le capteur de température d'éjecteur pour mesurer la température de l'éjecteur (22) est agencé pour mesurer la température du gaz contenant de l'hydrogène s'écoulant vers l'éjecteur (22).

8. Système de pile à combustible (A1) selon la revendication 7, dans lequel le capteur de température d'éjecteur pour mesurer la température de l'éjecteur (22) est agencé pour mesurer la température de l'éjecteur (22).

9. Système de pile à combustible (A1) selon l'une quelconque des revendications 3 à 8, dans lequel
- la section de commutation de canal d'écoulement (C4, C7, C8) est une soupape d'arrêt (33) agencée dans le canal de dérivation (20b), et
- le moyen de commutation de canal d'écoulement (C4, C7, C8) est agencé pour commuter le canal d'écoulement par l'intermédiaire de la soupape d'arrêt (33).

10. Système de pile à combustible (A1) selon l'une quelconque des revendications 3 à 8, dans lequel
- la section de commutation de canal d'écoulement (C4, C7, C8) est une soupape à trois voies (27) pour commuter le canal d'alimentation (20a) et le canal de dérivation (20b), et
- le moyen de commutation de canal d'écoulement (C4, C7, C8) est agencé pour commuter le canal d'écoulement par l'intermédiaire de la soupape à trois voies (27).

11. Système de pile à combustible (A1) selon l'une quelconque des revendications 3 à 8, dans lequel
- la section de commutation de canal d'écoulement (C4, C7, C8) est une soupape flexible (35) agencée sur le canal de dérivation (20b), et
- le moyen de commutation de canal d'écoulement (C4, C7, C8) est agencé pour commuter le canal d'écoulement par l'intermédiaire de la soupape flexible (35).
